# EUROPEAN PATENT APPLICATION

(11) **EP 4 517 515 A1**
(43) Date of publication of application: **05.03.2025**
(21) Application number: 23194015.6
(22) Date of filing: 29.08.2023
(51) Int. Cl.: G06F 7/00, G06F 15/80, G06N 3/0464, G06N 3/063

(54) **HETEROGENEOUS MULTI-ACCELERATOR ARCHITECTURE FOR EXECUTION OF CONVOLUTIONAL NEURAL NETWORKS**

(71) Applicant: Siemens Aktiengesellschaft, 80333 München (DE)
(72) Inventor: CECH, Christian, 2483 Ebreichsdorf (AT); CHILKU, Bekim, 1190 Wien (AT); FISCHER, Bernhard, 2122 Wolkersdorf im Weinviertel (AT); HINTERSTOISSER, Thomas, 2102 Bisamberg (AT); MATSCHNIG, Martin, 3430 Tulln (AT)
(74) Representative: Siemens Patent Attorneys

(57) **Abstract**

Present invention concerns an electronic processing system (300), the electronic processing system (300) being adapted to execute a neural network (100) having multiple layers (110, 120A-D, 130). The electronic processing system (300) comprises: at least one main processing circuitry (310); a plurality of acceleration circuitries (350A, 350B) with different sizes, the acceleration circuitries (350A, 350B) being operable under control of the main processing circuitry (310), wherein each acceleration circuitry (350A, 350B) is adapted or adaptable to execute a layer (110, 120A-D, 130) of the neural network (100).

The invention also concerns a corresponding method, as well as a computer program product and a storage medium.

## Description

Present invention concerns approaches of efficiently executing neural networks.

### Background of the Invention

Convolutional Neural Networks (CNNs) are an example of neural networks. CNNs may be considered as a component of systems with object detection features. It has been demonstrated that CNNs can achieve an accuracy on object recognition that is even better than the human eye. However, CNNs, as well as other Neural Networks (NN) may be data intense and/or required considerable processing power when executed. There are required approaches allowing efficient execution of NNs even on resource-limited systems, e.g., edge-systems and/or embedded systems.

### Disclosure of the Invention

A problem underlying the invention consists in providing an improved technique to efficiently execute a neural network, in particular on an embedded device.

The invention solves the given problem by means of subject-matter defined in enclosed independent claims. Dependent claims describe preferred embodiments.

There is disclosed an electronic processing system. The electronic processing system is adapted to execute a neural network having multiple layers. The electronic processing system comprises at least one main processing circuitry. The electronic processing system also comprises a plurality of acceleration circuitries with different sizes. The acceleration circuitries are operable under control of the main processing circuitry, wherein each acceleration circuitry is adapted or adaptable to execute a layer of the neural network. This may facilitate parallel processing and/or overlapping of actions between accelerators and/or when executing layers of the neural network, in particular with limited resources. This may be considered to represent a heterogenous accelerator architecture, due to differently sized accelerators (acceleration circuitries) being utilized.

It may be considered that different acceleration circuitries may be adapted or adaptable to execute different layers of the neural network. In some cases, the layers executed by the accelerators may be consecutive layers of the network, and/or may be arranged such that one of the layers provides, as its output, input for another layer; this may facilitate overlapping transfer of data and/or execution of layers, and/or parallel processing at different layers. However, in some cases, different accelerators may represent the same layer; this may facilitate parallel processing of the same input.

In general, an acceleration circuitry, and/or each acceleration circuitry separately, may comprise a plurality of processing elements (PEs) and a local memory, and/or more than one local memories. The processing elements of an acceleration circuitry, and/or a layer, may be adapted and/or connected to perform filtering, and/or multiplying with weights of the layer, and/or matrix multiplication, and/or a convolution operation. Different acceleration circuitries may have different processing elements, e.g., of same or similar functionality, or of different functionalities. Different acceleration circuitries may have different local memories. A local memory may be addressable and/or connected, e.g., to or by the main processing circuitry, via a data bus and/or DMA (Direct Memory Access). In some cases, local memory of one accelerator may not be accessible by another accelerator without using DMA and/or the data bus, and/or without instruction and/or control by the main processing circuitry.

An acceleration circuitry may comprise multiple local memories, for example two or more, e.g., separate local memory for each two or more of input data, output data, network data and/or auxiliary data. This may facilitate efficient data exchange and/or parallel operation.

It may be considered that the size of acceleration circuitry may pertain to a size of a local memory (or memories) of the acceleration circuitry, and/or a number of processing elements. Alternatively, or additionally, the size of an acceleration circuitry, and/or of a layer, may pertain to the connections (e.g., number of connections, and/or number of total connected PEs) of the neural network, and/or number of operations to be performed, e.g., dependent on the input, and/or may pertain to the input size accepted by the acceleration circuitry and/or of the layer executed thereon, and/or the output size provided by the acceleration circuitry and/or of the layer executed thereon. Different acceleration circuitries may differ in one or more, or all, of sizes. This allows adapting accelerators to different layers and/or tasks. In some cases, there may be one or more acceleration circuitries having the same size, next to at least one with different size.

At least one of the acceleration circuitries may be adapted to execute more than one layer of the neural network. This allows sequential implementation of different layers, e.g., if one layer has been completed; thus, re-use of circuitry may be provided. It may be considered that this may not necessarily comprise changing the acceleration circuitry and/or the size of the acceleration circuitry. However, in some cases, e.g., with reconfigurable slot/s on an FPGA, the acceleration circuitry may be reconfigured, which may allow additional optimization. In general, implementation of different layers may comprise setting up different neural network layers, e.g., according to network data specifying the layer, and/or providing corresponding network data and/or input.

It may be considered that at least one acceleration circuitry, and/or the size of at least one acceleration circuitry, is adapted to at least one layer of the neural network it is adapted to execute. Each of the acceleration circuitries, and/or each of the sizes, may be adapted to at least one layer, which may be different layers between different acceleration circuitries. This may facilitate optimized use of available resources.

Adaption of circuitry and/or size may correspond to adapting the number of PEs, and/or connection of PEs, and/or function of PEs, and/or the size and/or number of local memories, and/or input and/or output interface/s. In general, it may be considered that adapting the size may lead to a local memory not able to store and/or process, at the same time, all possible input for a layer, and/or all network data for a layer (in particular, weights). Thus, one or more acceleration circuitries and/or sizes may be adapted for partial input, and/or partial weights or partial processing, and/or partial output.

In general, one or more of the acceleration circuitries may be implemented in a Field Programmable Gate Array, FPGA, and/or Application Specific Integrated Circuitry, ASIC. Different acceleration circuitries may be implemented in different components, and/or types of components. An FPGA may in particular be used for highly specialized applications, and/or for development purposes, and/or may provide flexibility in application and implementation. In some cases, an FPGA may comprise one or more reconfigurable slots, on which an acceleration circuitry may be implemented. A reconfigurable slot may allow reconfiguration at run-time (during execution of the neural network), thus providing great flexibility. Implementation on an ASIC may be cost-efficient, in particular if the circuitry is widely used and/or mass-produced.

The main processing circuitry may be implemented as fixed circuitry, e.g., System on a Chip, SoC, and/or on a printed circuit board. Fixed in this context may pertain to fixed functionality and/or hardware at run-time; it may be adaptable and/or programmable and/or reconfigurable, e.g., outside of run-time. Alternatively, or additionally, the main processing circuitry may provide general processing capacity, e.g., comprising one or more general purpose chips and/or circuitries, like a CPU and/or microcontroller. Such a system may be particularly suitable for controlling the acceleration circuitries.

Local memories of the acceleration circuitries and/or a memory of the main processing circuitry may be connected to the same data bus. This may allow easy transfer of data, e.g., input data and/or output data and/or network data and/or auxiliary data, e.g., controlled by the main processing circuitry, and/or one or more of the acceleration circuitries.

Direct memory access between local memories of the acceleration circuitries and/or the memory of the main processing circuitry and/or external memory may be provided. This may facilitate data transfer with low processing effort for the main processing circuitry, in particular on a processor or controller of this circuitry.

In some cases, the neural network may be a Convolutional Neural Network, CNN. The structure of such a neural network with multiple layers of usually different sizes may allow optimised use of the proposed system.

There is also considered a method of operating an electronic processing system as described herein. The method comprises providing first output from at least a first acceleration circuitry as second input to at least a second acceleration circuitry. This facilitates parallel processing and/or data transfer, for efficient use of the system when executing the neural network. The method may comprise memory transfer by one or more acceleration circuitries, while at least one acceleration circuit executes a layer.

In particular, there may be considered that according to the method, at least one second acceleration circuitry may be controlled to process the second input, e.g. while executing a layer, while at least one of the first acceleration circuitry processes data; and/or at least one of the first acceleration circuitries may process first input, while at least one of the second acceleration circuitries processes data.

Processing data in this context may refer to, performing memory transfer. Alternatively, it may refer to executing a layer, e.g., processing of input to determine output by a layer; the input may be stored in a local memory, e.g., after a memory transfer. It may be considered that memory transfer and executing a layer may be sequential for an acceleration circuit.

Accordingly, parallel execution of layers, or parallel memory transfer and execution of a layer may be provided using the plurality of acceleration circuitries.

A computer program product is considered. The computer program product comprises instructions and/or program code or program code means and/or network data causing processing circuitry and/or a system, in particular, an electronic processing system as described herein, to perform a method as described herein, for example when executed by the processing circuitry and/or system. The computer program product may comprise one or more modules associated to each action of the method, e.g., a module for memory transfer, e.g., providing input, and/or a module for executing a layer, e.g. for processing input and/or data, and/or a module for configuring a layer of a neural network on an acceleration circuitry (which may be considered a form of memory transfer, e.g., of network data and/or auxiliary data).

Furthermore, a storage medium storing a computer program product as described herein is proposed. The storage medium may comprise and/or be implemented as one or more memories and/or have different parts or components of the program product stored on different memories or media. The storage medium may be non-transitory. It may be considered that the storage medium may be computer-readable.

The method may especially be carried out, completely or in part, by electronic execution means like a computer system or an electronic processing system. To these ends, the method may be formulated as a computer program product with program code means (e.g., instructions, which may in general be computer-readable and/or computer-executable). The above described system may comprise the computer system. Advantages or features of the method may apply to the method and vice versa.

A neural network may generally be an artificial neural network; in some cases, it may be referred to a model, and/or represented by a model. The neural network may comprise multiple layers. The layers may be of different type; in particular, the network may comprise an input layer, for receiving data to be evaluated and/or as training data as input or base data, and an output layer, providing processed data as output and/or result. Between input layer and output layer, there may be one or more hidden layers, which may be interconnected to receive output of one layer as input, and/or to provide its output as input for another layer. The neural network may be linear, or non-linear. In some cases, the neural network may be recursive, e.g., such that the same layer (at least one layer) may be provided with output of a layer (e.g., itself, or a different layer) multiple times. A layer may operate based on matrix multiplication being applied on input. In some cases, a layer may operate based on convolution being applied on input. Base input may correspond to original data the network as a whole is intended to operate on to provide a result, which may be considered output of the last/output layer and/or the neural network as a whole.

In some variants, the neural network may be a CNN, and/or may be utilized for object detection, and/or image analysis. It may be considered that in general, the neural network already may be trained and/or may be pre-trained, and/or that the neural network and/or its layers are implemented in a trained form; execution of the network may comprise, and/or pertain to (and/or be limited to), using the trained network, and/or using the network for inference. There may be provided data to the electronic processing system representing the neural network and/or network layers and/or base input. The electronic processing system may be adapted to implement an accelerator and/or layer in a reconfigurable slot of an FPGA, or in a fixed part of an FPGA, or ASIC. A layer of the neural network may be copied and/or written to the accelerator, e.g., based on corresponding data provided to the system. Such data may be provided externally, e.g., from a cloud and/or data connection.

An acceleration circuitry may in general be referred to as accelerator, and/or may in general be considered auxiliary circuitry, e.g., provided with control information and/or input and/or network data by a main processing circuitry; this may be considered the acceleration circuitry being operable and/or controllable and/or operable under control of the main processing circuity.

The main processing circuitry may have one or more processing cores, and/or may be able to handle multiple threads of processing. There may be a mapping of one core and/or one thread to each accelerator, e.g., to facilitate parallel processing in the main processing circuitry, in particular for data transfer between memories and/or pre- and/or post-processing of input and/or output of a layer implemented on an accelerator. It may be considered that the main processing circuitry may comprise one or more interfaces, e.g., to connect to the acceleration circuitries. Such connection may be provided by or via a data bus, and/or utilizing DMA. The data bus and/or DMA may be controlled or controllable by the main processing circuity, and/or by one or more of the acceleration circuitries.

The electronic processing system may comprise, and/or be represented by, and/or implemented as, an embedded device or system, and/or a printed circuit board. The acceleration circuitries may be implemented on different hardware than the main processing circuitry, e.g., connected to the main processing circuitry via a data bus and/or suitable interface/s. For example, the main processing circuitry may be implemented as a microcontroller structure and/or a SoC and/or a computer system, wherein the accelerators may be implemented on an FPGA, or as ASIC; different accelerators may be implemented differently. For example, one or more accelerators may be implemented as ASICs, and/or one or more on an FPGA. In particular, smaller ones of the accelerators may be implemented on an FPGA, e.g., a reconfigurable slot of such, which may allow implementing different layers on the same hardware; for example, after one layer has performed all its processing, a different (upcoming) layer may be implemented on the slot. The electronic processing system, and/or the main processing circuitry, may be adapted to control and/or adapt an FPGA, e.g., to implement one or more of the accelerators, and/or to reconfigure one or more reconfigurable slots.

In general, a processing element may represent a specific operation to be performed in repetition, e.g., in large numbers, instead of providing a large range of functionalities. Thus, processing elements may be simple in comparison to more generalized units, which may be commonly provided in main processing circuitries, allowing quick and efficient processing at relatively low cost.

Input data may represent input, output data may represent output. Network data may represent the neural network; network data stored and/or used in an accelerator may in particular represent weights and/or filter information and/or factors and/or connections between PEs to be used for the implemented network layer. Auxiliary data may comprise intermediate results, and/or additional information, in particular control information, e.g., pertaining to a target layer and/or accelerator for the output, and/or formatting of data, or similar. It may be considered that for one or more acceleration circuitries, in particular an output layer (providing a result), a separate local memory for output data may be provided, which may have a size adapted to store all output by a layer. This may be used in connection with an acceleration circuitry and/or local memory that may require partial input and/or partial weights or partial processing; the output of a layer may be smaller than the input, and/or storing the complete output before transfer to another layer and/or as a result may be time-efficient.

Partial input may refer to only a part, not the whole, of input data being received and/or stored in local memory, and/or being processed at the same time; different parts of the input may be provided at different times, e.g., after processing a part, another part may be provided. This may be controlled by the main processing circuitry, and/or based on auxiliary data, which may be provided by an accelerator to the main processing circuitry.

Partial processing or partial weights may refer to only a part, not the whole, processing and/or weighing of input (e.g., by multiplying with one or more weights) being performed, and/or partial network data or weights being stored in local memory, and/or being processed at the same time; different parts of the network data or weights may be provided at different times, e.g., after processing a part, another part may be provided. This may be controlled by the main processing circuitry, and/or based on auxiliary data, which may be provided by an accelerator to the main processing circuitry.

Partial output may refer to only a part, not the whole, of output data being provided and/or stored in local memory, and/or being determined at the same time; different parts of the output may be provided at different times, e.g., after processing a part, another part may be provided. This may be controlled by the main processing circuitry, and/or based on auxiliary data, which may be provided by an accelerator to the main processing circuitry.

The method may especially be carried out, completely or in part, by electronic execution means like a computer system. To these ends, the method may be formulated as a computer program product with program code means. The above-described system may comprise the computer system. Advantages or features of the method may apply to the method and vice versa.

### Brief Summary of the Enclosed Figures

The above-described properties, features and advantages of present invention as well as the way they are achieved will be made clearer and better understandable in the light of the following discussion, making reference to exemplary embodiments shown in accompanying figures, in which
- Figure 1: shows an exemplary convolutional neural network;
- Figure 2: shows an exemplary electronic processing system;
- Figure 3: shows an exemplary electronic processing system according to the invention; and
- Figure 4: shows an exemplary processing timeline for different accelerator architectures.

### Detailed Exemplary Embodiments of the Invention

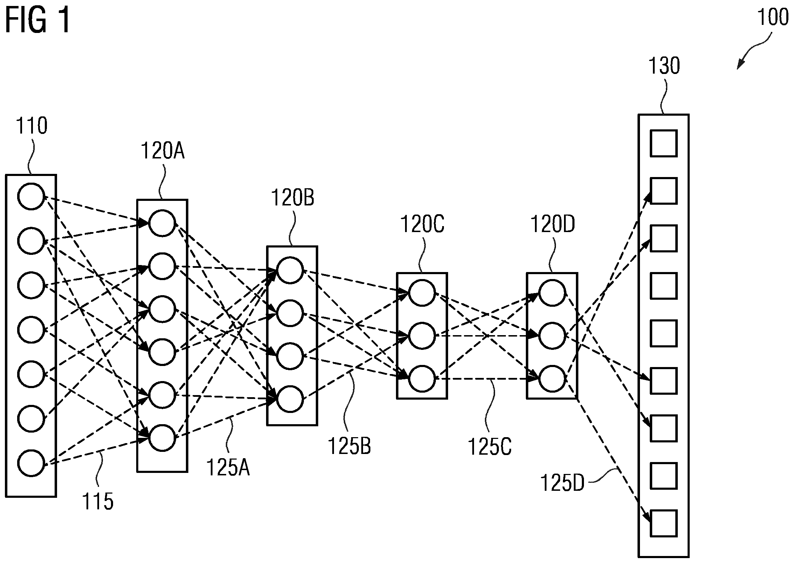

Figure 1 shows an exemplary neural network 100 that consists of a set of layers. In particular, there is provided an input layer 110, several hidden layers 120A, 120B, 120C, 120D (fewer or more hidden layers may be considered) and an output layer 130. The layers may be considered to be arranged consecutively or sequentially, such that output from one layer may be considered input provided by the layer before it; recursion may be considered, but is not shown. In the example of Figure 1, neighbouring layers are connected through weights 115, 125A-D (dashed arrows) in a sequential order or consecutively. As input each layer takes a set of data (white circles) known as Input Feature Map (IFM) and performs dot operations with weight inputs (or a convolutional operation) from filters by producing a new set of data known as Output Feature Map (OFM), which may be provided as input or IFM for the next layer. The network 100 may in some cases be implemented as a convolutional network, e.g., at least one layer may perform a convolutional operation. The goal of each layer of the network is to extract features with a certain probability (white squares in the last green layer) for the observed samples and to recognize the ones for which it is trained. The number, shape and the size of layers, e.g., CNN layers, may vary, and may depend on the application.

The process of object detection with CNN may comprise two stages. First, the CNN is trained for the patterns required to be identified, and then applied as inference to classify objects of new input data. In a typical solution, the training is done in the cloud, while the inference may be run on edge devices close to the location where data are generated. In general, a neural network may be trained before application or inference in a similar manner.

Since CNN applications are data driven, they require large processing power and wide memory bandwidth. This is especially challenging for inferences running on edge embedded devices with limited resources. On one hand, the number of processing units (processing elements) is limited, and with that the processing capacity of the embedded edge device. On the other hand, the memory bandwidth on today's solutions may be a performance bottleneck. To achieve reasonable execution time of inferences on embedded edge devices, the system may require well organized data flow architectures with parallel processing capability and well-defined memory architecture. Similar demands may apply to other neural networks and/or applications.

The limitations of embedded devices may make it impossible to efficiently exploit parallelism for applications with CNN inference.

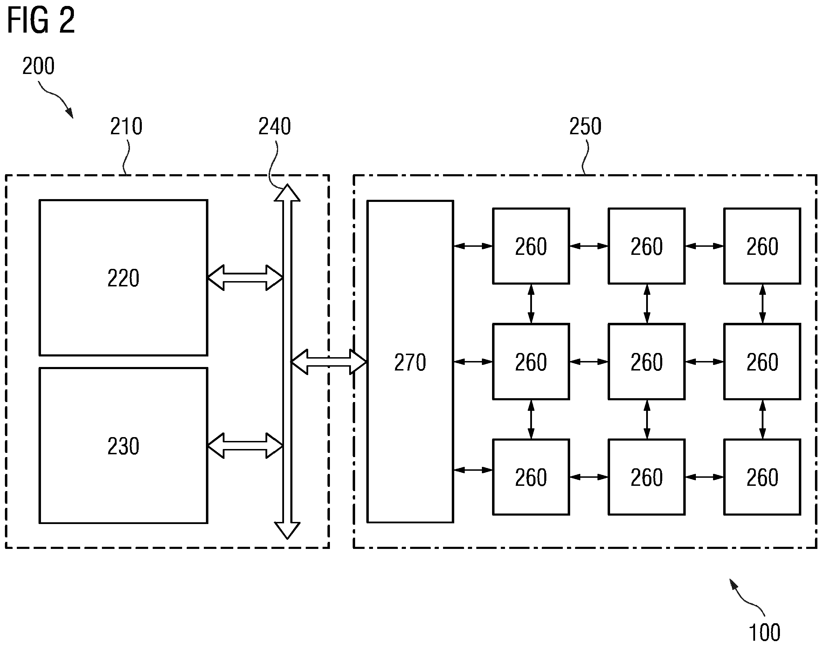

Figure 2 shows an exemplary embedded system 200 containing main processing circuitry 210, which in the example comprises a central processing unit (CPU) 220, system memory 230 and a data bus 240. Main processing circuitry 210 may be implemented as a different form of processing circuity. An accelerator (as an example of acceleration circuitry) 250 is provided, connected to the data bus 240. The accelerator 250 comprises multiple Processing Elements (PEs) 260 which are connected to each other and to a local memory 270. All PEs 260 may perform multiply and accumulate operations on inputs and weights supplied from the local memory 270. The output of the PEs 260 is saved again in the local memory 270 and later is transferred to the system memory 230 to be available for the CPU 220. The transfer of data between local memory 270 and system memory 230 may be done through DMA devices, or in some cases the accelerator 250 may comprise a fetch unit and act as a master on the bus 240. The control sequences for the accelerator 250 are generated and managed by the CPU 220, which thus may control operation of the accelerator 250.

Different approaches for the organization of input data reuse may be considered. The PEs 260 can be row stationary, weight stationary, output stationary, or no local reuse depending on what kind of data they will keep locally may be examples of such organizational approaches. Layers of the neural network may be larger than the size of the accelerator can accommodate at the same time. Therefore, one, more or all layers of the CNN may need to be divided and partially sent to the accelerator for processing. Furthermore, different layers may have different requirements for local memory size and/or different requirements for number of PEs. All this may be considered before the execution of the CNN inference starts.

Apart from limitation on parallelism, these models also require a high-level of complexity for control of the data flow between PEs and local memory. All the complexity needs to be addressed by generating a set of instructions to control the PEs interconnection in a way that forwards data to the right PE.

A system with heterogenous (e.g., differently sized) multiple accelerators (and/or acceleration circuitries) is proposed. Multiple, e.g., small, accelerators that are tailored for different layers of the N model like a CNN model may be considered, instead of having one large accelerator which executes all the layers sequentially. The proposed solution reduces data flow complexity by design and improves inference performance.

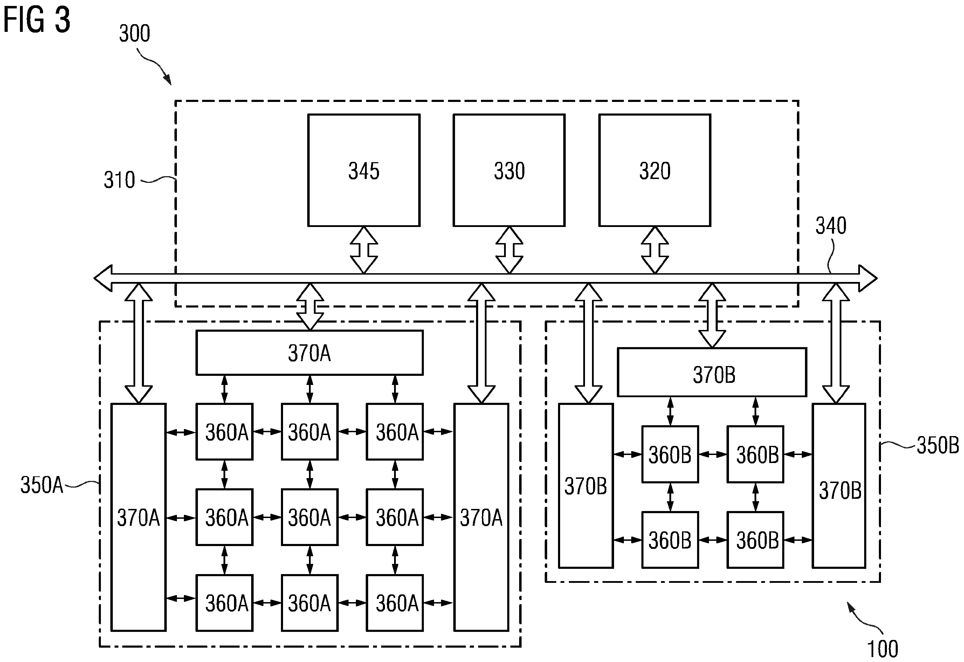

Figure 3 shows an exemplary inventive system 300. As shown in Figure 3, the system 300 may be implemented on a SoC (System-on-a-Chip)/FPGA (Field Programmable Gate Array); it may be considered, however, that the system, and/or one or more accelerators, may be implemented on an ASIC (Application Specific Integrated Circuitry). System 300 may comprise a main processing circuitry 310, which may comprise a CPU or other controller 320, e.g., for pre- and post-processing of data (e.g., base input and/or result). It may further comprise a system memory 330. A data bus 340, and optionally a DMA (Direct Memory Access) 345, may be provided as part of the circuitry 310 and/or the system 300. Accelerators 350A, 350B (more than the two accelerators shown may be considered) are provided, e.g., connected to the bus 340.

Each accelerator 350A, 350B may comprise a plurality of PEs 360A, 360B and associated local memory 370A, 370B. Local memory of an accelerator 350A, 350B may be provided in one or more units, which may be addressable separately. Local memory arrangement may be different between different accelerators.

The data bus 340 and/or DMA 345 may provide data transfer between system memory and local memory, and/or between local memories, and/or between main processing circuitry and the accelerator/s. The accelerators 350A, 350B may be mapped to, and/or implemented on, an FPGA, for example a FPGA part of a (e.g., printed) board. To each accelerator 350A, 350B, there may be associated a layer of a neural network; this may refer to the accelerator executing and/or being set up and/or programmed and/or adapted for executing the layer, e.g., on associated input.

Network layers, e.g., CNN layers, may differ to each other in regard to size, e.g., on the size of the inputs and/or weights, and/or on the size of the output that they generate. The accelerators may be tailored on layer level, and/or may be designed to have a separate local memory for inputs, weights, and outputs with an optimized size fitting the needs of the layer. Such an approach may enable the accelerator to access multiple data at the same time. Optimization may also be provided on layer level with the number of PEs for each accelerator.

The number of accelerators may be limited by the size of the programmable logic in the FPGA, which thus may limit the number of layers that can be processed in parallel. Since the accelerators are small, and may not be able to fit the complete layer associated to it, one or more accelerators may have to perform operations on partial inputs with partial weights or partial processing. The partial output of one layer may be used as input for the next layer on the next accelerator, thus enabling inter-layer parallelism. When a layer is finished, its accelerator may be replaced in the FPGA with the accelerator of an upcoming layer. For example, it may be a layer not yet utilized, or a copy of a layer still processing data, to allow parallel processing of different partial data.

According to the invention, overlapping between transfer time (memory transfer, e.g., providing input to one layer) and execution time when two or more layers are executed in parallel may be provided.

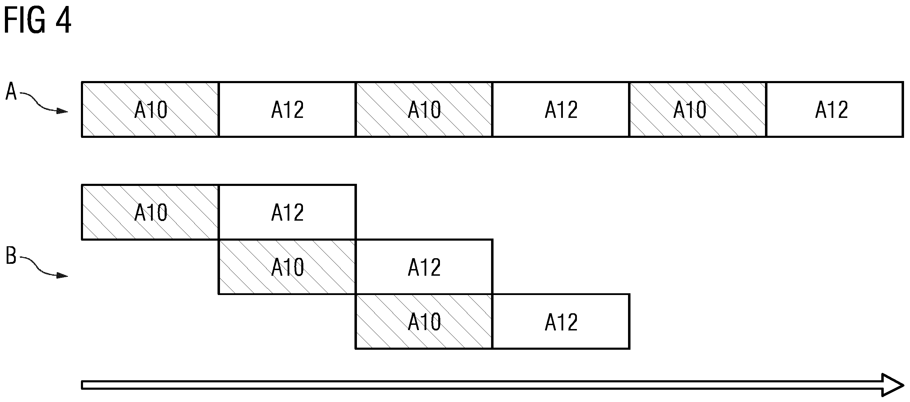

Figure 4 shows examples of differences in the timing of the inference when it is executed on a single (row A) and on multiple accelerators (rows B, showing three different accelerators).

An action of memory transfer A10 may comprise providing input to an accelerator, e.g., base input to an input layer or output of one layer as input to another layer, and/or receiving input, and/or providing output, e.g., as a result.

An action A12 of processing in a layer and/or accelerator may comprise executing the layer and/or applying the layer on input, and/or determining output based on an input. To different accelerators, different layers may be associated (executed by them).

Figure 4 shows exemplary processing and memory transfer timelines for different accelerator configurations. Each accelerator may be adapted to perform either A10 or A12 at a time, and/or perform actions A10 and A12 sequentially. Different processing A10 and/or memory transfer A12 may have different durations, between different accelerators, and/or depending on the input and/or output. For example, partial input may have different sizes (e.g., a last part may be smaller than earlier parts), and/or a layer or accelerator may have to provide output before it receives new input for further processing, which may take longer than just receiving input. For illustrative purposes, Figure 4 only shows the same durations for action A10 and A12 between different accelerators.

As can be observed from Figure 4, on a system with a single accelerator, the process of data transfer (action A10) and data processing (action A12) must be done sequentially. On a system with multiple accelerators (e.g., with a single DMA), the processes of data transfer (action A10) and data processing (action A12) can be overlapped, thus reducing the overall execution time. Due to input-data dependency between layers, the overlapping may be limited to the transfer of weights. However, depending on the time interval required for different actions A10 and/or A12 for different accelerators, parallel execution in different layers may be provided, e.g., when processing partial input (and/or providing partial output).

According to the invention, timing performance for neural networks may be improved, in particular for CNN inference; inter-layer parallelism and/or overlapping of the transfer time with the execution time may be provided. Moreover, complexity of the data flow by tailored accelerators for each specific layer may be provided.

In general, circuitry may comprise integrated circuitry. Integrated circuitry and/or processing circuitry may comprise one or more processors and/or controllers (e.g., microcontrollers), and/or ASICs (Application Specific Integrated Circuitry) and/or FPGAs (Field Programmable Gate Array) and/or SOCs (System-on-a- Chip), or similar. It may be considered that processing circuitry comprises, and/or is (operatively) connected or connectable to one or more memories or memory arrangements or storage media, which may be non-transitory. An associated connection may be provided by one or more suitable interfaces and/or a data bus and/or serial or parallel connection. A storage medium or memory arrangement may comprise one or more memories. A memory may be adapted to store digital information. Examples for memories comprise volatile and non-volatile and/or non-transitory memory, and/or Random Access Memory (RAM), and/or Read-Only-Memory (ROM), and/or magnetic and/or optical memory, and/or flash memory, and/or hard disk memory, and/or EPROM or EEPROM (Erasable Programmable ROM or Electrically Erasable Programmable ROM). Integrated circuitry may in general provide a set of instructions; the instructions provided may be called and/or used, and/or be available for calling and/or using, e.g., when executing an application and/or processing input, e.g., to provide an output.

Even though present invention has been illustrated and explained in detail above with reference to the preferred embodiments, the invention is not to be construed as limited to the given examples. Variants or alternate combinations of features given in different embodiments may be derived by a subject matter expert without exceeding the scope of present invention.

Independent of the grammatical term usage, individuals with male, female or other gender identities are included within the term.

### Reference List

- 100: neural network
- 110: input layer
- 115: weights
- 120A-120D: hidden layers
- 125A-125D: weights
- 130: output layer

- 200: embedded system
- 210: main processing circuitry
- 220: CPU
- 230: system memory
- 240: data bus
- 250: accelerator
- 260: processing element
- 270: local memory

- 300: electronic processing system
- 310: main processing circuitry
- 320: CPU
- 330: system memory
- 340: data bus
- 345: DMA
- 350A-350B: accelerator
- 360A-360B: processing element
- 370A-370B: local memory

## Claims

1. Electronic processing system (300), the electronic processing system (300) being adapted to execute a neural network (100) having multiple layers (110, 120A-D, 130), and the electronic processing system (300) comprising:
at least one main processing circuitry (310);
a plurality of acceleration circuitries (350A, 350B) with different sizes, the acceleration circuitries (350A, 350B) being operable under control of the main processing circuitry (310), wherein each acceleration circuitry (350A, 350B) is adapted or adaptable to execute a layer (110, 120A-D, 130) of the neural network (100).

2. System according to claim 1, wherein different acceleration circuitries (350A, 350B) are adapted or adaptable to execute different layers (110, 120A-D, 130) of the neural network (100).

3. System according to one of the preceding claims, wherein an acceleration circuitry (350A, 350B) comprises a plurality of processing elements (360A, 360B) and a local memory (370A, 370B) .

4. System according to one of the preceding claims, wherein the size of acceleration circuitry (350A, 350B) pertains to a size of a local memory (370A, 370B) of the acceleration circuitry (350A, 350B) and/or a number of processing elements (360A, 360B).

5. System according to one of the preceding claims, wherein at least one of the acceleration circuitries (350A, 350B) is adapted to execute more than one layer (110, 120A-D, 130) of the neural network (100).

6. System according to one of the preceding claims, wherein the size of at least one acceleration circuitry (350A, 350B) is adapted to at least one layer (110, 120A-D, 130) of the neural network (100) it is adapted to execute.

7. System according to one of the preceding claims, wherein one or more of the acceleration circuitries (350A, 350B) are implemented in a Field Programmable Gate Array, FPGA, and/or Application Specific Integrated Circuitry, ASIC.

8. System according to one of the preceding claims, wherein the main processing circuitry (310) is implemented as fixed circuitry, e.g., System on a Chip, SoC, and/or on a printed circuit board.

9. System according to one of the preceding claims, wherein local memories (370A, 370B) of the acceleration circuitries (350A, 350B) and/or a memory (330) of the main processing circuitry (310) are connected to the same data bus (340).

10. System according to one of the preceding claims, wherein direct memory access (345) between local memories (370A, 370B) of the acceleration circuitries (350A, 350B) and/or the memory (330) of the main processing circuitry (310) and/or external memory is provided.

11. System according to one of the preceding claims, wherein the neural network (100) is a Convolutional Neural Network, CNN.

12. Method of operating an electronic processing system (300) according to one of claims 1 to 11, the method comprising providing (A10) first output from at least a first acceleration circuitry (350A, 350B) as second input to at least a second acceleration circuitry (350A, 350B).

13. Method according to claim 12, wherein at least one second acceleration circuitry (350A, 350B) is controlled to process (A12) the second input while at least one of the first acceleration circuitry (350A, 350B) processes data (A10, A12), and/or at least one of the first acceleration circuitries (350A, 350B) processes (A12) first input while at least one of the second acceleration circuitries (350A, 350B) processes data (A10, A12).

14. Computer program product, the computer program product comprising instructions causing processing circuitry (310) and/or a system (300) according to one of claims 1 to 11 to perform a method according to one of claims 12 to 13

15. Storage medium storing a computer program product according to claim 14.
